(19) Europäisches Patentamt
European Patent Office
Office européen des brevets

(11) **EP 4 352 687 B1**

(12) **EUROPEAN PATENT SPECIFICATION**

(45) Date of publication and mention
of the grant of the patent:
**09.04.2025   Bulletin 2025/15**

(21) Application number: **21742546.1**

(22) Date of filing: **07.06.2021**

(51) International Patent Classification (IPC):
***G06T 5/77*** *(2024.01)*

(52) Cooperative Patent Classification (CPC):
**G06T 5/77;** G06T 2207/20021

(86) International application number:
**PCT/PL2021/050038**

(87) International publication number:
**WO 2022/260544 (15.12.2022 Gazette 2022/50)**

(54) **METHOD FOR AUTOMATIC OBJECT REMOVAL FROM A PHOTO, PROCESSING SYSTEM AND ASSOCIATED COMPUTER PROGRAM PRODUCT**

VERFAHREN ZUR AUTOMATISCHEN ENTFERNUNG EINES OBJEKTS AUS EINEM FOTO, VERARBEITUNGSSYSTEM UND ZUGEHÖRIGES COMPUTERPROGRAMMPRODUKT

PROCÉDÉ D'ÉLIMINATION AUTOMATIQUE D'OBJETS D'UNE PHOTO, SYSTÈME DE TRAITEMENT ET PRODUIT-PROGRAMME D'ORDINATEUR ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.04.2024   Bulletin 2024/16**

(73) Proprietor: **TCL Research Europe Sp. z o. o.
00-132 Warszawa (PL)**

(72) Inventor: **LUKASZEWICZ, Jakub
00-132 Warszawa (PL)**

(74) Representative: **Kuhnen & Wacker
Patent- und Rechtsanwaltsbüro PartG mbB
Prinz-Ludwig-Straße 40A
85354 Freising (DE)**

(56) References cited:
**WO-A2-2021/035228      US-A1- 2016 323 505
US-A1- 2017 359 523      US-A1- 2018 330 470**

**Description**

The present invention relates to a method for automatic object removal from an image such as a photo or a live camera preview, particularly for mobile devices provided with a camera. The invention also relates to a processing system able to implement the method and a computer program product associated with the method.

BACKGROUND

Removing crowd and unwanted objects to improve quality of a photo is one of the situations in which a photo edition or retouching is highly desirable. Especially, a lot of photos are taken in places where other objects, apart from the object to be photographed are present. Often the access to the object to be photographed is difficult and said object is occluded by other objects such as fences or trees. The result is that for example the bars of the fence or branches of the tree are present in photos and hide some important parts of the scene, which makes photos less attractive for the author. Such situations often occur in zoological gardens where animals are separated from the visitors by bars or wire or museums where the display is behind some kind of barrier. It such cases it is often impossible to take the picture of the object without some object, for example a fence partially obscuring the view of the object, for example an animal.

For this purpose, editing of a single scene and retouching a single photo by inpainting is known from the prior art. Editing and retouching multiple scenes by inpainting is also known from the prior art. Video inpainting refers to a field of computer vision that aims to remove objects or restore missing or tainted regions present in a video sequence by utilizing spatial and temporal information from neighboring scenes. The overriding objective is to generate an inpainted area that is merged seamlessly into the video. In that way when the video is played as a sequence, the visual coherence is maintained throughout and no distortion in the affected area is visible to the human eye.

For single photo editing there are also known other solutions, usually used by professional graphic designers, which provide high quality tools (e.g. Photoshop) but require a lot of manual work and high-level expertise. There are also apps made for mass market (e.g. Touch Retouch) which are much simpler but offer significantly lower quality and also require manual selection of objects that need to be removed.

US 2017/359523 A1, Rubinstein et al. describes a method for capturing, via a camera, an initial image of the field of view from an initial camera pose. The camera includes a display. The method includes determining that an obstruction is observable in the field of view. The method also includes determining, based on the obstruction, at least one desired camera pose. The at least one desired camera pose includes at least one desired position of the camera. The method further includes providing, via the display, a capture interface. The capture interface includes instructions corresponding to moving the camera to the at least one desired camera pose. The method yet further includes capturing, via the camera, at least one further image of the field of view. The method additionally includes processing the captured images to provide at least one background image of the field of view. At least a portion of the obstruction is not present in the background image.

US 2018/330470 A1, Karki et al. describes techniques for removal of obstructions in a digital image scene, in which target and source digital images that exhibit parallax, one to another, are obtained that were captured together by an image capture device at a similar point in time using two different lenses of the image capture device. A foreground obstruction is identified based on displacement in apparent position of objects in the target and source digital images. The foreground obstruction is removed from the target digital image, such as by generating an obstruction mask that represents the location of the foreground obstruction and copying pixels from the source digital image to the target digital image based on the locations identified in the obstruction mask. The target digital image with the obstruction removed is output to a user interface or service provider system, for example.

WO 2021/035228 A2, FutureWei Technologies Inc. describes a method and network device for correcting photos implemented by an image-capturing device, where the method includes: capturing a primary photo of a target, wherein the primary photo contains an unwanted object; capturing multiple auxiliary photos of a background region behind the target after capturing the primary photo; generating a first transformed auxiliary photo by mapping a first auxiliary photo to the primary photo, wherein the first auxiliary photo is selected from the multiple auxiliary photos; merging the first transformed auxiliary photo with the primary photo to generate a first merged photo in which the unwanted object is partially removed; and in-painting all or part of the unwanted object when the unwanted object is not completely removed from the first merged photo.

In general, all known solutions for object or crowd removal from a single photo require manual operation from the user.

Thus, there is still a need to provide good quality automated method for crowd or object removal from a single photo.

DISCLOSURE OF THE INVENTION

Starting from the depicted prior art, the object of the invention is based on developing of a method for automatic object removal from a photo, which would be suitable, firstly, for ensuring automatic removal of unwanted objects from a photo, like crowd or cars or fences without additional manual operation of the user and, secondly, for being able to obtain a good quality output photo.

This object is achieved by a method for automatic object removal from a photo, a processing system comprising an image processing pipeline according to the invention, and an associated computer program product.

The invention provides crowd removal or object removal as a new feature of camera or any device with embedded camera that allows to automatically remove crowd or object from a photo using deep neural networks and semantic methods (object detection, semantic segmentation etc.).

According to the first aspect of the invention a computer-implemented method for automatic removal of an unmoving object from a photo is provided. The method according to the invention comprises providing a reference photo containing at least one unmoving object to be removed from the reference photo, providing at least one consecutive photo taken from another angle than the reference photo and containing at least one said unmoving object to be removed from the reference photo, for the reference photo and each at least one consecutive photo performing separately: a) detection of at least one said unmoving object to be removed from the reference photo, where the photo is divided into two planes, wherein at least one object to be removed is assigned to the first plane and the second plane comprises elements to be outputted in a final photo, b) division of all captured photos into tiles, c) calculation of a cost function for each tile, wherein only tiles with second plane are processed and next, based on the tiles from all photos, searching for the best selection of tiles by performing optimization of the global cost function, outputting the final photo comprising the selected tiles that are the best combination of tiles for which the global function has the minimum value, said outputted final photo being the reference photo with at least one unmoving object removed and replaced by background from at least one consecutive photo.

Advantageous developments of the method for automatic object removal from a photo according to the invention are specified in the dependent claims.

The method in accordance with the invention may also have one or more of the following features, separately or in combination:

- steps from a) to c) are performed on the fly after providing each consecutive photo,
- detection of at least one unmoving object to be removed from the reference photo is a semantic object detection using a neural network,
- detection of at least one unmoving object results in production of an object mask, where the object mask comprises at least one object to be removed and the object mask is the first plane, separate from the second plane, where the second plane comprises elements to be outputted in the final photo,
- before step a) an alignment of each of at least one consecutive photo with the reference photo is performed,
- each photo is divided into at least 2×2 tiles,
- size of the tiles is adaptive,
- in the optimization step a loopy belief propagation algorithm is used,
- the step of outputting a new photo comprises blending,
- the step of providing at least one consecutive photo ends automatically,
- the step of alignment comprises key points determination using a combined corner and edge detector,
- in each consecutive iteration of the global cost function optimization step a new value of the cost function is calculated for all candidates tiles being neighboring tiles of the tile replaced in the reference photo in the previous iteration.

According to a second aspect a processing system for automatic object removal from a photo is provided. The system comprises at least a memory and a processor which is configured to implement steps of the method according to the invention.

The invention also concerns a computer program product comprising instructions, which when executed by a processor, cause the processor to perform steps of the method according to the invention.

The proposed invention allows for automatic removal of crowd, fence or other unmoving objects from a photo. Thanks to acquisition of at least two photos information in time regarding said objects and background can be gathered.

Thanks to a specific cost function calculated for each predefined subregion of each consecutive image it is possible to evaluate fitting of each distinct subregion taken from other photos into the reference photo which undergoes edition.

Thanks to the context based global optimization of the cost function the proposed invention allows to edit photos so as to ignore regions which should not change or its change is not important in the context of a better photo.

BRIEF DESCRIPTION OF THE DRAWINGS

Other advantages and features will become apparent from reading the description of the invention and from the appended drawings, in which:

FIG.1 shows an input photo and an output photo of the method according to the invention;
FIG.2 shows key points found in each consecutive photo which are used for alignment of each consecutive photo with the reference photo;
Fig.3 shows a flowchart of the method in accordance with one embodiment of the invention.

DETAILED DESCRIPTION

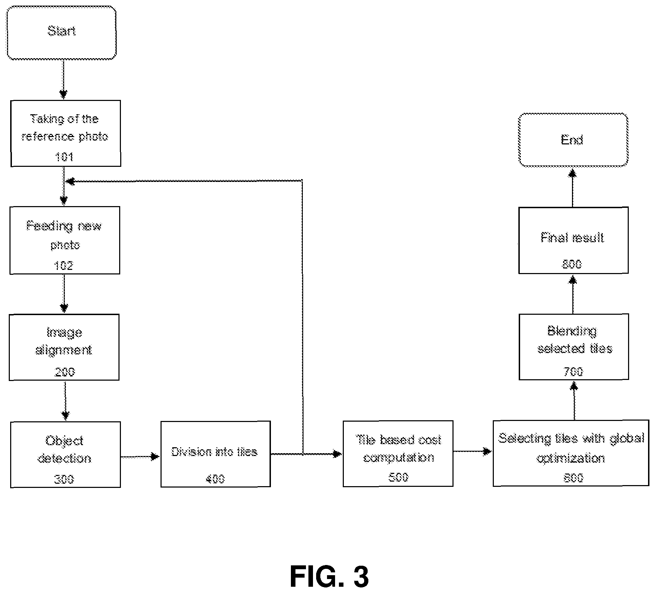

Aspects of the present invention are described below with reference to the drawings. In particular, Fig.3 shows a flowchart of the method, apparatus (system) and computer program product according to the invention. It will be understood that each block of the flowchart and combinations of blocks in the flowchart, can be implemented by computer program instructions. These computer program instructions may be provided to a processor of a general-purpose computer, special purpose computer, or other programmable data processing apparatus, such that the instructions, executed via the processor of the computer or other programmable data processing apparatus, create means for implementing the functions/acts specified in the flowchart.

The general idea of the invention is to allow users of a digital camera to take not only a single photo, as in traditional camera mode, but continuously capture consecutive frames for as long as required by the user in order to acquire enough information for further processing. In the preferred solution, user of a digital camera may slightly change position while taking different frames, obtaining different angles of the image.

The invention is based on the assumption that when obtaining different frames from different angles, on different frames different parts of the object of interest will be hidden by the object or objects to be removed, allowing deletion of the unwanted objects and creation of unobstructed image of the object of interest by combining elements from different frames. In a way, each photograph is treated as it would be divided into two planes, the first plane comprising object to be removed and the second comprising the rest of the scene, object of interest included. Preferably, the distance between the camera and the object to be removed is relatively small. Preferably, the distance between the object to be removed and the object of interest is bigger than the distance between the camera and the object to be removed, and therefore we can treat the second plane as planar.

The captured data is processed online to detect people and/or objects using deep neural networks and to divide the photo into planes, wherein said people and/or objects to be removed are assigned to the first plane and the second plane comprises elements to be outputted in a final photo. This information allows to remove unwanted people and/or unmoving objects from the reference photo.

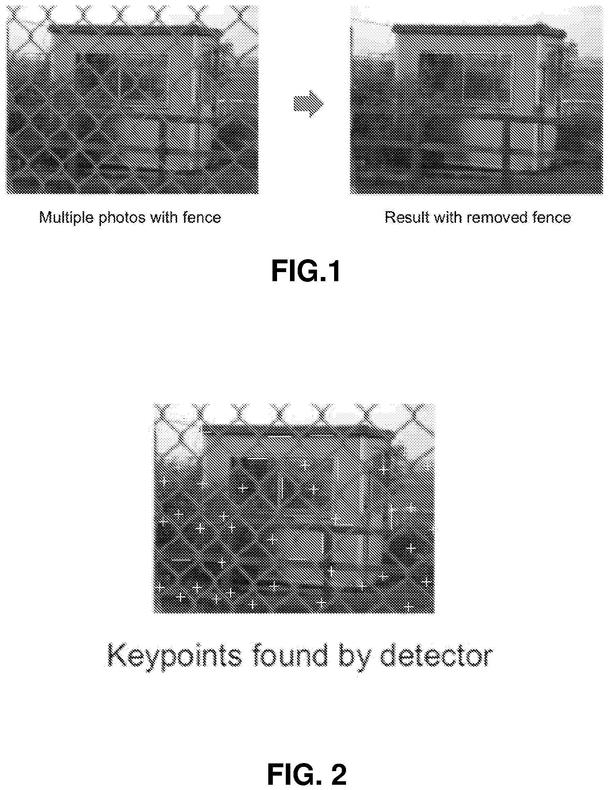

Fig. 1 shows in general what is the purpose and what are the results of the method of automatic object removal from a photo. It can be observed that an input image contained a fence obscuring the building that was the object of interest. The output image received at the end of the method according to the invention contains only said building while the fence is replaced by background (the second plane elements that were behind the fence and occluded by it on the left picture of the Fig. 1) of good quality.

Now the method for automatic object removal from a photo, according to the invention will be described in reference to Fig.3 which shows an associated flowchart of steps. The proposed method for automatic object removal from a photo is composed of several steps. The method comprises of step 100 of providing multiple photos; image alignment step 200 performed in the alignment module; object detection step 300 performed in the object detection module; the division step 400 performed in the background modeling module; tile cost function calculation step 500 performed in the calculation module; global cost optimization step 600 performed in the optimization module; blending step 700 performed in blending module and final result step 800. All the steps will be described in greater detail below.

The method begins by step 100 of providing multiple photos. This step 100 includes two substeps.

The first substep 101 is a substep 101 of providing 'a reference photo' by means of a camera. The 'reference photo' is a first photo from a series of photos taken continuously by the user of the camera. The reference photo is the one from which the at least one unmoving object will be removed and replaced by a background obtained from another, consecutive photo.

In the preferred embodiment the method according to the invention requires multiple photos to be taken. Apart from the reference photo provided in substep 101 a set of images is taken in a sequence by the user of the camera from slightly different positions and therefore angles during a predetermined period in substep 102, providing at least one consecutive photo. This set or series of images can comprise images registered by a standalone digital camera or a digital camera embedded into another digital device like a mobile phone. The images can be written into a separate memory before processing or can be captured directly from the camera.

The substep102 of providing at least one consecutive input image includes preferably capturing consecutive photos and their parameters directly from the camera in on the fly mode. Alternatively, the reference photo and at least one consecutive photo can be provided by reading it from a memory, acquiring image parameters, in particular its size and resolution, and optionally displaying it on a display for user perception.

In one embodiment, if the method is performed on the fly, it is the user who decides when to stop acquiring consecutive photos. In practice the period of acquisition can last from 5 to 20 seconds. In another embodiment the decision how many consecutive images should be processed is taken automatically based on the amount of acquired information, namely the method stops automatically if the required amount of information has been gathered for removal off all detected objects.

Several steps used for processing of each acquired photo will be now described below. The person skilled in the art will understand that those steps can be performed on the fly for each photo as it arrives, or can be performed in another technically reasonable sequence once all photos are registered.

Next step of the method of automated object removal from a photo is an image alignment step 200 performed in the alignment module. In this alignment step, each incoming image is aligned onto the reference frame of the first image, namely the reference photo, by use of the key points and ORB key points detector, described in more detail below. A 'reference frame' means here an initial position of the reference photo.

First, a substep 201 of key points determination is performed. For example, a Shi-Thomasi feature detector as described in Chris Harris and Mike Stephens. "A Combined Corner and Edge Detector". Alvey Vision Conference, 1988, is used for the purpose of key points finding. By using this approach key points can be found very quickly even on a mobile device. Key points are used to detect relative position between consecutive input images. The result is shown on Fig.2.

Next, the image alignment step 200 comprises a matching substep 202. Within this step each input image from a set of consecutive images is matched using for example RANSAC algorithm as described in M. A. Fischler, R. C. Bolles. Random Sample Consensus: A Paradigm for Model Fitting with Applications to Image Analysis and Automated Cartography. Comm. of the ACM, 1981.Knowing position of those key points in each consecutive input image, each incoming image can be warped into the reference frame of the first image and then, such aligned image can be used in further processing. By performing this alignment step 200 it is guaranteed that the content of each incoming input image can be objectively compared with the reference photo, namely the first image. This is required since the user is moving in time between taking of two consecutive images and the same object is captured with different coordinates on each photo. It will be obvious for the person skilled in the art that the alignment step 200 will cause cutting some parts of the consecutive images for further processing.

Each of the frames fed into the alignment module during the image alignment step 200 has its' position adjusted to previously collected frames. Namely the first image from the set of images is adjusted to the reference image, the second image is adjusted to the first image and so on. It is done by matching detected by the ORB key point detector key points of the image-to-be-aligned against key points found on reference frame (frame of the previous image) using GMS matcher. The key points detected must be distinctive and numerous enough as to allow at least robust matches, so finding holography between the frames is possible.

Next step of the method of automated object removal from a photo is semantic object detection step 300 performed in the object detection module. In this detection step 300 an Efficient Det architecture based neural network is used for object detection on the reference photo and each consecutive photo to produce object mask with the same resolution as reference photo. In particular, in one embodiment, the object to be removed is a fence and the produced mask is a fence mask. This fence is detected on the reference photo and each consecutive photo. In another embodiment other types of objects such as tree branches, can be detected. In this step 300 of semantic object detection the reference image and other consecutives photo are processed so as to detect objects, in particular parts of the fence. In this step a regular rectangular regions of the photo are outputted by the object detection algorithm implemented with the above-mentioned neural network. The data set comprises photos with labeled parts of the fence. Of course, the model can be trained for other type of objects based also on a labeled data set. Here in this description, such a detected region is called 'a region of interest'. All captured images and detected regions of interest are temporarily registered. The information which parts of a photo contains detected object is contained in a specific data structure and later on assigned to each corresponding image subregion extracted in the next step of the method according to the invention. During detection step 300 the detected object to be removed is assigned to the first plane while the elements to be outputted in the final photo, that are not to be removed, are assigned to the second plane.

Then both the aligned image and the object mask, for example the fence mask are forwarded to the background reconstruction module, in order to reconstruct the parts of the background from the reference image that are occluded by the fence.

The method then proceeds to the division step 400 of dividing of all photos captured in substeps 101 and 102 into tiles and the tiles comprise the object to be removed. Here 'a tile' means a 2D rectangular subregion of an image received, by partitioning said image with the use of a net having a mesh of predetermined size. On the other hand, a tile is a 3D element resulting from partition of a 3D structure, the 3D structure consisting of a set of consecutive images. The first two dimensions of said 3D structure are physical dimensions of each consecutive image while the third dimension is time. Basically, each spatial position in the grid has several tiles collected in different time points and from different angles. This multi-dimensional grid can be represented as Markov Random Field, where each tile is a node. After collecting many tiles from different time points, it should be possible to have at least one object-free (fence-free) tile for each position in the grid which will make creating the non-occluded background image possible created from the tiles of the second plane, without the use of the tiles comprising the fence, that is the tiles of the first plane. If there are not enough fence-free tiles (tiles of the second plane) for each position in the grid, the method goes back to the step 102 of feeding the new consecutive frame to be then forwarded to the alignment module.

In general, the size of a tile in 2D will results from a predetermined number of meshes into which an image should be split in 2D, while said number of tiles depends on the computation power of the hardware and can be adaptive. In one embodiment the decision how to partition a photo into tiles can be taken automatically, for example based on hardware capacity of a specific mobile phone type. Preferably, the size and number of tiles is predetermined. Each photo is divided into at least 2×2 tiles. For example, photos are partitioned into 21×11 tiles. In the case of photos having 1920×1080 and being partitioned into 21×11 tiles resolution the size of a tile is (1920/21)×(1080/11). Each tile of the partitioned image has adjacent tiles, also called neighboring tiles or neighbors. The particulars of the relation between the tiles will be described in more detail further in the description.

Each photo is partitioned using the same net and contains a predetermined number of rectangular subregions, namely each photo is divided into exactly the same number of tiles. The person skilled in the art will understand that smaller the size of a tile is the more detailed processing is possible. For example, more detailed processing is desired if the fence has a denser mesh or comprises more bars close together. On the other hand, the processing cannot be time-consuming, and preferably it is done in real time and thus the number of tiles can be determined dynamically in each case separately.

In consequence, the step 400 of dividing each photo into tiles results in a photo consisting of regular rectangle puzzles. Tiles of the same sizes and of the same coordinates are present on the reference photo and other consecutives photos. Tiles from the consecutives photos are called candidate tiles. Theoretically each candidate tile can replace a tile of the same coordinates on the reference photo. However only chosen tiles from the reference photo should be replaced by a candidate tile from one of consecutives photos, namely those comprising parts of the object to be removed. Moreover, each tile is assigned an information about presence of a detected object within its area. As a consequence, the output information from the trained neural network model which is further kept in a tile can be used also in checking whether the acquisition of photos can be early stopped. Namely, if for each tile in the reference photo, for which an object to be removed has been detected, there is at least one candidate tile in at least one consecutive photo which does not contain said detected object, then it means that enough information has been acquired for processing.

Once the image is split into tiles, based on the neural network output, an information about the presence or a lack of detected object within its area is assigned to each tile. This will allow further to provide the answer for the question which tile should be replaced, and whether it should be replaced at all, in further steps of the method.

For each photo, including the reference photo, the method according to the invention proceeds to a tile cost function calculation step 500 wherein the cost function for each tile from the second plane is calculated. Each of tiles of each image is considered as a separate node of the Markov Random Filed (MRF). In practice this step results in receiving a set of specific values $C_{x_p}$ for each tile of the second plane, each value representing matching degree of the tile into a specific position of the reference photo. Such set of values is also calculated for tiles in the reference photo.

The cost function of assigning candidate tile can be represented by equation:

$$C_{x_p} = O_{x_p} + \sum_{(p,q)} V_{pq}(x_p, x_q)$$

The equation defines cost of assigning candidate tile $x_p$ to position p.
The cost comprises of:

- Cost O indicating if tile $x_p$ contains an unmoving object.
- Sum of costs $V_{pq}$ computed as sum of squared differences between pixels of tile $x_p$ and adjacent pixels of neighbor tile $x_q$. The sum is computed over all neighbor positions q for given position p.

The calculated cost function takes into consideration parameters as follows:

- whether a tile includes a specific part of unmoving object, detected in a semantic detection step 300.
- How well does a tile fit to neighboring tiles (it favorizes rectangles which fit each other).

The Applicant found that in on the fly mode processing of one incoming photo (including steps 100, 200, 300, 400, 500) takes about 500 ms, which allows for real-time calculation and is satisfactory for commercial use.

Next step of the method according to the invention is a step 600 of global cost optimization which enables choosing optimal tiles combination forming a new image from selected tiles chosen from tiles from all captured images. In practice this step is iterative and enables choosing a combination of tiles which give the smallest possible cost. By iteratively optimizing the global cost function a decision for each tile in the reference photo is taken whether it should be replaced by one of tiles having the same coordinates from one of the consecutive photos.

If the tiles' combination is optimal then:

- unmoving objects are replaced with background that would be visible in the absence of said unmoving object,
- there are no sharp transitions between tiles,
- there are no traces of the unmoving object,
- there are no incomplete objects like a section of the fence hanging "in the air".

In the step 600 of global cost optimization any algorithm that is typically used for optimizing MRFs e.g., Loopy Belief Propagation can be utilized. The choice of the algorithm determines the trade-of between the computation speed and possibility of convergence to the optimal configuration. However, in one embodiment the following greedy optimization algorithm can be used.

The calculation is initialized with tiles taken from the reference frame (of the reference photo). Then each tile is checked by iterating at random order. During said checking, all available versions of a specific tile (namely all other tiles having the same coordinates within the net) are compared with the tile from the reference photo and their costs are calculated. The tile, with the lower cost replaces the tile with the higher cost. After replacement, the neighborhood of the replaced tile is recomputed. It means that new values of the cost function of all four neighboring tiles of the tile already replaced are calculated.

In other words, in the first iteration of the optimization algorithm the global cost function value for all tiles from the reference photo is known. Moreover, single cost function value is known for each candidate tile having a position which corresponds to a considered tile in the reference image. During one iteration, theoretically all single tiles from the reference photo are virtually replaced by a corresponding candidate tile from each of consecutive photo. This process is random in terms of the tile position in the reference photo for which the calculation is performed. However, said one iteration ends if a replacing tile for which the global cost function value is lower is found. Then another iteration starts and early stopping of the optimization step is not possible until the tile with lowest value of the global cost function is found.

In each consecutive iteration all calculations regarding global cost function are performed the same way. However, in each consecutive iteration before the iteration the cost function for four neighboring candidate tiles of the tile that has been replaced if the previous iteration was calculated. This is because the cost function for a specific tile takes into account a factor resulting from neighboring tiles. It means that the cost function becomes out of date for a candidate tile once one of its neighboring tile in the reference photo has been replaced. The value of the global cost function can be determined correctly in the consecutive iteration only for updated input data if the calculated value of the global cost function is lower, then again, the replacement takes place and the iteration stops or the calculation is performed randomly for another tile in the reference photo.

The optimization algorithm stops if the predetermined number of iterations has been performed or there are no more tiles in the reference photo for which the replacement would result in receiving a lower value of the global cost function (no more replacements takes place).

Given the possibility of converging to a suboptimal solution, restarting of the algorithm multiple times with random initialization can be considered. The number of restarts should scale with the number of computations that can be performed according to the specification of the final device in which the method will be implemented.

If during optimization there is no progress and loss is not diminishing, the global cost optimization stops, which can be called an early stopping.

Then the method goes to the step 700 of blending. This step is performed in order to output a final photo having at least one object removed and replaced by a background. In one embodiment, once a region (tile) to be reconstructed is calculated in a specific iteration of the optimization step, it is blended into the reference photo, for example if on the fly displaying is required. In another embodiment blending is performed after the end of the optimization step. Blending can be done by any suitable algorithm, for example using Poisson blending as described in [4] Patrick Perez, Michel Gangnet, Andrew Blake, "Poisson Image Editing" 2014. The purpose of this step is to receive a photo of very good quality. The Poisson blending algorithm elevates color differences and reduces number of artifacts. The regions (tiles) are blended onto the reference image to remove crowd and unwanted objects and produce final result.

The processing system according to the invention (not shown) comprises a memory and a processor which is configured (by comprising several software modules) to implement steps of the method as described above. In one embodiment the processing system is embedded into a mobile phone. The mobile phone according to the invention comprises display means (not shown) for displaying the output of the software modules. From the user perspective the processing system allows him to perform actions as follows:

- user starts object or objects removal and first photo is taken,
- user continues objects removal to collect data. More photos are collected,
- user stops objects removal and final result is computed. The processing system uses collected data to remove objects, for example a fence, from the first photo.

In another embodiment the processing system can comprise a module for supporting steady holding of the camera. Said module outputs information on the position of the camera to be displayed by the displaying means. It increases chances of acquisition of non-blurred photos of the same quality. In one embodiment, display means are configured to show a reference photo with frames surrounding detected objects and a camera position indicator. The user can see when enough information has been acquired to remove a specific object, for example based on the frame color. In another embodiment the method stops automatically if the required amount of information has been gathered for removal off all detected objects to be removed.

Aspects of the present invention can be realized by a computer of a system or apparatus (or devices such as a CPU or MPU) that reads out and executes a computer program product recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the claimed computer program product is provided to the computer for example via a network or from a recording medium of various types serving as the memory device. The computer program product according to the invention comprises also a non-transitory machine-readable medium.

It should be understood that the present invention is not limited to the above examples. For those of ordinary skill in the art, improvements or changes can be made according to the above description, and all these improvements and changes should fall within the protection scope of the appended claims of the present invention.

**Claims**

1. A computer-implemented method for automatic removal of an unmoving object from a photo, comprising

   - providing a reference photo containing at least one unmoving object to be removed from the reference photo;
   - providing at least one consecutive photo taken from another angle than the reference photo and containing at least one said unmoving object to be removed from the reference photo;
   for the reference photo and each at least one consecutive photo performing separately:

   a) detection of at least one said unmoving object to be removed from the reference photo, where the photo is divided into two planes, wherein at least one object to be removed is assigned to the first plane and the second plane comprises elements to be outputted in a final photo;
   b) division of all captured photos into tiles;
   c) calculation of a cost function for each tile, wherein only tiles with second plane are processed;

   next, based on the tiles from captured photos, searching for the best selection of tiles by performing optimization of the global cost function; outputting the final photo comprising the selected tiles that are the best combination of tiles for which the global function has the minimum value, said outputted final photo being the reference photo with at least one unmoving object removed and replaced by background from at least one consecutive photo.

2. A method according to claim 1, wherein the calculation of the cost function is performed according to the formula:

$$C_{x_p} = O_{x_p} + \sum_{(p,q)} V_{pq}(x_p, x_q)$$

where $C_{x_p}$ is a cost of assigning a tile $x_p$ to a given position p;
$O_{x_p}$ is a component defining if the tile contains an object to be removed;
$V_{pq}(x_p, x_q)$ is sum of squared differences between adjacent pixels of the tile $x_p$ and a neighboring tile $x_q$.

3. A method according to claim 1, wherein steps from a) to c) are performed on the fly after providing each consecutive photo.

4. A method according to claim 1, wherein detection of at least one unmoving object to be removed from the reference photo is a semantic object detection using a neural network.

5. A method according to claim 1, wherein detection of at least one unmoving object results in production of an object mask, where the object mask comprises at least one object to be removed and the object mask is the first plane, separate from the second plane, where the second plane comprises elements to be outputted in the final photo.

6. A method according to claim 1, wherein before step a), alignment of each of at least one consecutive photo with the reference photo is performed.

7. A method according to claim 1, wherein each photo is divided into at least 2×2 tiles, size of the tile is adaptive.

8. A method according to claim 1, wherein in the optimization step a loopy belief propagation algorithm is used; or

   the step of outputting a new photo comprises blending; or
   the step of providing at least one consecutive photo ends automatically; or
   the step of alignment comprises key points determination using a combined corner and edge detector; or
   in each consecutive iteration of the global cost function optimization step a new value of the cost function is calculated for all candidates tiles being neighboring tiles of the tile replaced in the reference photo in the previous iteration.

9. A data processing system, comprising:

a processor; and
a memory coupled to the processor to store instructions, which when executed by the processor, cause the processor to perform operations, the operations comprising:

- providing a reference photo containing at least one unmoving object to be removed from the reference photo;
- providing at least one consecutive photo taken from another angle than the reference photo and containing said unmoving object to be removed from the reference photo;

for the reference photo and each at least one consecutive photo performing separately:

a) detection of said unmoving object to be removed from the reference photo, where the photo is divided into two planes, wherein at least one object to be removed is assigned to the first plane and the second plane comprises elements to be outputted in a final photo;
b) division of all captured photos into tiles;
c) calculation of a cost function for each tile, wherein only tiles with second plane are processed;

next, based on the tiles from captured photos, searching for the best selection of tiles by performing optimization of the global cost function; outputting the final photo comprising the selected tiles that are the best combination of tiles for which the global function has the minimum value, said outputted final photo being the reference photo with at least one unmoving object removed and replaced by background from at least one consecutive photo.

10. The data processing system according to claim 9, wherein the calculation of the cost function is performed according to the formula:

$$C_{x_p} = O_{x_p} + \sum_{(p,q)} V_{pq}(x_p, x_q)$$

where $C_{x_p}$ is a cost of assigning a tile $x_p$ to a given position p;
$O_{x_p}$ is a component defining if the tile contains an object to be removed;
$V_{pq}(x_p, x_q)$ is sum of squared differences between adjacent pixels of the tile $x_p$ and a neighboring tile $x_q$.

11. The data processing system according to claim 9, wherein in each consecutive iteration of the global cost function optimization step a new value of the cost function is calculated for all candidates tiles being neighboring tiles of the tile replaced in the reference photo in the previous iteration.

12. The data processing system according to claim 9, wherein before step a), alignment of each of at least one consecutive photo with the reference photo is performed.

13. A mobile phone comprising a data processing system according to claim 9.

14. A computer program product comprising instructions, which when executed by a processor, cause the processor to perform operations, the operations comprising:

- providing a reference photo containing at least one unmoving object to be removed from the reference photo;
- providing at least one consecutive photo taken from another angle than the reference photo and containing said unmoving object to be removed from the reference photo;
for the reference photo and each at least one consecutive photo performing separately:

a) detection of said unmoving object to be removed from the reference photo, where the photo is divided into two planes, wherein at least one object to be removed is assigned to the first plane and the second plane comprises elements to be outputted in a final photo;
b) division of all captured photos into tiles;
c) calculation of a cost function for each tile, wherein only tiles with second plane are processed;

next, based on all the tiles from captured photos, searching for the best selection of tiles by performing optimization of the global cost function; outputting the final photo comprising the selected tiles that are the best combination of tiles for which the global function has the minimum value, said outputted final photo being the reference photo with at least one unmoving object removed and replaced by background from at least one consecutive photo.

15. The computer program product according to claim 14, wherein before step a), alignment of each of at least one consecutive photo with the reference photo is performed.

**Patentansprüche**

1. Computerimplementiertes Verfahren zur automatischen Entfernung eines sich nicht bewegenden Objektes aus einem Foto, mit folgenden Schritten:

   - Bereitstellen eines Referenzfotos, das zumindest ein sich nicht bewegendes Objekt enthält, das aus dem Referenzfoto entfernt werden soll;
   - Bereitstellen zumindest eines konsekutiven Fotos, das aus einem anderen Winkel als das Referenzfoto aufgenommen wurde und zumindest das eine sich nicht bewegende, aus dem Referenzfoto zu entfernende Objekt enthält;
   wobei für das Referenzfoto und jedes zumindest eine konsekutive Foto separat das Folgende durchgeführt wird:

   a) Erfassung zumindest eines sich nicht bewegenden, aus dem Referenzfoto zu entfernenden Objekts, wobei das Foto in zwei Ebenen aufgeteilt wird, wobei zumindest ein zu entfernendes Objekt der ersten Ebene zugeordnet wird und die zweite Ebene Elemente aufweist, die in einem Endfoto ausgegeben werden sollen;
   b) Aufteilen aller aufgenommenen Fotos in Kacheln;
   c) Berechnung einer Kostenfunktion für jede Kachel, wobei nur Kacheln mit zweiten Ebenen verarbeitet werden;

   wobei als Nächstes auf Basis der Kacheln aufgenommener Fotos eine Suche nach der besten Auswahl an Kacheln durch ein Durchführen einer Optimierung der globalen Kostenfunktion erfolgt;
   Ausgeben des Endfotos, das die ausgewählten Kacheln aufweist, bei denen es sich um die beste Kombination an Kacheln handelt, für die die globale Funktion den Mindestwert hat, wobei das ausgegebene Endfoto das Referenzfoto ist, bei dem zumindest ein sich nicht bewegenden Objekt entfernt und durch einen Hintergrund aus zumindest einem konsekutiven Foto ersetzt wurde.

2. Verfahren nach Anspruch 1, wobei die Kalkulation der Kostenfunktion gemäß der folgenden Formel erfolgt:

$$C_{x_p} = O_{x_p} + \sum_{(p,q)} V_{pq}(x_p, x_q)$$

wobei $C_{xp}$ Kosten sind, die anfallen, wenn eine Kachel $x_p$ einer bestimmten Position p zugewiesen wird;
wobei $O_{xp}$ ein Bestandteil ist, der definiert, ob die Kachel ein zu entfernendes Objekt enthält;
wobei $V_{pq}(x_p, x_q)$ eine Summe aus quadrierten Unterschieden zwischen benachbarten Pixeln der Kachel $x_p$ und einer benachbarten Kachel $x_q$ ist.

3. Verfahren nach Anspruch 1, wobei Schritte von a) bis c) spontan durchgeführt werden, nachdem jedes konsekutives Foto bereitgestellt wurde.

4. Verfahren nach Anspruch 1, wobei die Erfassung zumindest eines sich nicht bewegenden, aus dem Referenzfoto zu entfernenden Objekts eine semantische Objekterfassung unter Verwendung eines neuronalen Netzwerks ist.

5. Verfahren nach Anspruch 1, wobei die Erfassung zumindest eines sich nicht bewegenden Objekts in der Erzeugung einer Objektmaske resultiert, wobei die Objektmaske zumindest ein zu entfernendes Objekt aufweist und die Objektmaske die erste Ebene ist, die von der zweiten Ebene getrennt ist, wobei die zweite Ebene Elemente aufweist, die in dem Endfoto auszugeben sind.

6. Verfahren nach Anspruch 1, wobei vor Schritt a) eine Ausrichtung von jedem des zumindest einen konsekutiven Fotos mit dem Referenzfoto durchgeführt wird.

7. Verfahren nach Anspruch 1, wobei jedes Foto in zumindest 2x2 Kacheln aufgeteilt wird, wobei die Größe der Kachel adaptiv ist.

8. Verfahren nach Anspruch 1, wobei bei dem Optimierungsschritt ein Loopy-Belief-Propagation-Algorithmus verwendet wird; oder

   der Schritt des Ausgebens eines neuen Fotos ein Mischen aufweist; oder
   der Schritt des Bereitstellens zumindest eines konsekutiven Fotos automatisch endet; oder
   der Schritt des Ausrichtens eine Hauptpunktbestimmung unter Verwendung eines kombinierten Ecken- und Kantendetektors aufweist; oder
   bei jedem konsekutiven Durchlauf des globalen Kostenfunktion-Optimierungsschritts ein neuer Wert der Kostenfunktion für alle Kandidatenkacheln berechnet wird, bei denen es sich um benachbarte Kacheln der Kachel handelt, die in dem Referenzfoto während des vorherigen Durchlaufs ersetzt wurde.

9. Datenverarbeitungssystem mit:

einem Prozessor; und

einem Speicher, der mit dem Prozessor verbunden ist, um Befehle zu speichern, die, wenn sie durch den Prozessor ausgeführt werden, den Prozessor veranlassen, Operationen durchzuführen, wobei die Operationen aufweisen:

- Bereitstellen eines Referenzfotos, das zumindest ein sich nicht bewegendes Objekt enthält, das aus dem Referenzfoto entfernt werden soll;
- Bereitstellen zumindest eines konsekutiven Fotos, das aus einem anderen Winkel als das Referenzfoto aufgenommen wurde und das sich nicht bewegende, aus dem Referenzfoto zu entfernende Objekt enthält;

wobei für das Referenzfoto und jedes zumindest eine konsekutive Foto separat das Folgende durchgeführt wird:

a) Erfassung des sich nicht bewegenden, aus dem Referenzfoto zu entfernenden Objekts, wobei das Foto in zwei Ebenen aufgeteilt wird, wobei zumindest ein zu entfernendes Objekts der ersten Ebene zugeordnet wird und die zweite Ebene Elemente aufweist, die in einem Endfoto ausgegeben werden sollen;
b) Aufteilen aller aufgenommenen Fotos in Kacheln;
c) Berechnung einer Kostenfunktion für jede Kachel, wobei nur Kacheln mit zweiten Ebenen verarbeitet werden;

wobei als Nächstes auf Basis der Kacheln aufgenommener Fotos eine Suche nach der besten Auswahl an Kacheln durch ein Durchführen einer Optimierung der globalen Kostenfunktion erfolgt;
Ausgeben des Endfotos, das die ausgewählten Kacheln aufweist, bei denen es sich um die beste Kombination an Kacheln handelt, für die die globale Funktion den Mindestwert hat, wobei das ausgegebene Endfoto das Referenzfoto ist, bei dem zumindest ein sich nicht bewegenden Objekt entfernt und durch einen Hintergrund aus zumindest einem konsekutiven Foto ersetzt wurde.

10. Datenverarbeitungssystem nach Anspruch 9, wobei die Kalkulation der Kostenfunktion gemäß der folgenden Formel erfolgt:

$$C_{x_p} = O_{x_p} + \sum_{(p,q)} V_{pq}(x_p, x_q)$$

wobei $C_{x_p}$ Kosten sind, die anfallen, wenn eine Kachel $x_p$ einer bestimmten Position p zugewiesen wird;
wobei $O_{x_p}$ ein Bestandteil ist, der definiert, ob die Kachel ein zu entfernendes Objekt enthält;
wobei $V_{pq}(x_p, x_q)$ eine Summe aus quadrierten Unterschieden zwischen benachbarten Pixeln der Kachel $x_p$ und einer benachbarten Kachel $x_q$ ist.

11. Datenverarbeitungssystem nach Anspruch 9, wobei bei jedem konsekutiven Durchlauf des globalen Kostenfunktion-Optimierungsschritts ein neuer Wert der Kostenfunktion für alle Kandidatenkacheln berechnet wird, bei denen es sich um benachbarte Kacheln der Kachel handelt, die in dem Referenzfoto während des vorherigen Durchlaufs ersetzt wurde.

12. Datenverarbeitungssystem nach Anspruch 9, wobei vor Schritt a) eine Ausrichtung von jedem des zumindest einen konsekutiven Fotos mit dem Referenzfoto durchgeführt wird.

13. Mobiltelefon mit einem Datenverarbeitungssystem nach Anspruch 9.

14. Computerprogrammprodukt mit Befehlen, die, wenn sie durch den Prozessor ausgeführt werden, den Prozessor veranlassen, Operationen durchzuführen, wobei die Operationen aufweisen:

- Bereitstellen eines Referenzfotos, das zumindest ein sich nicht bewegendes Objekt enthält, das aus dem Referenzfoto entfernt werden soll;
- Bereitstellen zumindest eines konsekutiven Fotos, das aus einem anderen Winkel als das Referenzfoto aufgenommen wurde und das sich nicht bewegende, aus dem Referenzfoto zu entfernende Objekt enthält;
wobei für das Referenzfoto und jedes zumindest eine konsekutive Foto separat das Folgende durchgeführt wird:

a) Erfassung des sich nicht bewegenden, aus dem Referenzfoto zu entfernenden Objekts, wobei das Foto in zwei Ebenen aufgeteilt wird, wobei zumindest ein zu entfernendes Objekts der ersten Ebene zugeordnet wird und die zweite Ebene Elemente aufweist, die in einem Endfoto ausgegeben werden sollen;
b) Aufteilen aller aufgenommenen Fotos in Kacheln;
c) Berechnung einer Kostenfunktion für jede Kachel, wobei nur Kacheln mit zweiten Ebenen verarbeitet werden;

wobei als Nächstes auf Basis der Kacheln aufgenommener Fotos eine Suche nach der besten Auswahl an Kacheln durch ein Durchführen einer Optimierung der globalen Kostenfunktion erfolgt;

Ausgeben des Endfotos, das die ausgewählten Kacheln aufweist, bei denen es sich um die beste Kombination an Kacheln handelt, für die die globale Funktion den Mindestwert hat, wobei das ausgegebene Endfoto das Referenzfoto ist, bei dem zumindest ein sich nicht bewegenden Objekt entfernt und durch einen Hintergrund aus zumindest einem konsekutiven Foto ersetzt wurde.

15. Computerprogrammprodukt nach Anspruch 14, wobei vor Schritt a) eine Ausrichtung von jedem des zumindest einen konsekutiven Fotos mit dem Referenzfoto durchgeführt wird.

## Revendications

1. Procédé mis en œuvre par ordinateur pour la suppression automatique d'un objet immobile d'une photo, comprenant

   - fournir une photo de référence contenant au moins un objet immobile à supprimer de la photo de référence ;
   - fournir au moins une photo consécutive prise sous un angle différent de celui de la photo de référence et contenant au moins un dit objet immobile à supprimer de la photo de référence ; pour la photo de référence et chacune desdites au moins une photo consécutive, la réalisation séparée :

     a) détection d'au moins un dit objet immobile à supprimer de la photo de référence, où la photo est divisée en deux plans, dans laquelle au moins un objet à supprimer est affecté au premier plan et le second plan comprend des éléments à sortir dans une photo finale ;
     b) division de toutes les photos capturées en tuiles ;
     c) calcul d'une fonction de coût pour chaque tuile, dans lequel seules les tuiles avec

   le second plan sont traitées ; ensuite, sur la base des tuiles des photos capturées, recherche de la meilleure sélection de tuiles en optimisant la fonction de coût globale ; sortie de la photo finale comprenant les tuiles sélectionnées qui constituent la meilleure combinaison de tuiles pour laquelle la fonction globale a la valeur minimale, ladite photo finale sortie étant la photo de référence avec au moins un objet immobile supprimé et remplacé par l'arrière-plan d'au moins une photo consécutive.

2. Le procédé selon la revendication 1, dans lequel le calcul de la fonction de coût est effectué selon la formule :

$$C_{x_p} = O_{x_p} + \sum_{(p,q)} V_{pq}(x_p, x_q)$$

où $C_{x_p}$ est un coût d'affectation d'une tuile $x_p$ à une position donnée p ;
$O_{x_p}$ est un composant définissant si la tuile contient un objet à supprimer ;
$V_{pq}(x_p, x_q)$ est la somme des différences au carré entre les pixels adjacents de la tuile $x_p$ et d'une tuile voisine $x_q$.

3. Le procédé selon la revendication 1, dans lequel les étapes a) à c) sont effectuées à la volée après la fourniture de chaque photo consécutive.

4. Le procédé selon la revendication 1, dans lequel la détection d'au moins un objet immobile à supprimer de la photo de référence est une détection sémantique d'objets utilisant un réseau neuronal.

5. Le procédé selon la revendication 1, dans lequel la détection d'au moins un objet immobile entraîne la production d'un masque d'objet, le masque d'objet comprenant au moins un objet à supprimer et le masque d'objet étant le premier plan, distinct du second plan, le second plan comprenant des éléments à sortir sur la photo finale.

6. Le procédé selon la revendication 1, dans lequel, avant l'étape a), on effectue l'alignement de chacune d'au moins une photo consécutive avec la photo de référence.

7. Le procédé selon la revendication 1, dans lequel chaque photo est divisée en au moins 2×2 tuiles, la taille de la tuile étant adaptative.

8. Le procédé selon la revendication 1, dans lequel, dans l'étape d'optimisation, un algorithme de propagation de croyance en boucle est utilisé ; ou

   l'étape de sortie d'une nouvelle photo comprend le mélange ; ou
   l'étape de fourniture d'au moins une photo consécutive se termine automatiquement ; ou
   l'étape d'alignement comprend la détermination de points clés à l'aide d'un détecteur combiné de coins et d'arêtes ; ou
   dans chaque itération consécutive de l'étape d'optimisation de la fonction de coût globale, une nouvelle valeur de la fonction de coût est calculée pour toutes les tuiles candidates qui sont des tuiles voisines de la tuile remplacée dans la photo de référence lors de l'itération précédente.

9.  Système de traitement de données, comprenant :

    un processeur ; et
    une mémoire couplée au processeur pour stocker des instructions qui, lorsqu'elles sont exécutées par le processeur, amènent le processeur à effectuer des opérations,
    les opérations comprenant :

    - fournir une photo de référence contenant au moins un objet immobile à supprimer de la photo de référence ;
    - fournir au moins une photo consécutive prise sous un angle différent de celui de la photo de référence et contenant ledit objet immobile à supprimer de la photo de référence ;

    pour la photo de référence et chacune des photos consécutives au moins, effectuer séparément :

    a) détection dudit objet immobile à supprimer de la photo de référence, où la photo est divisée en deux plans, dans laquelle au moins un objet à supprimer est affecté au premier plan et le second plan comprend des éléments à sortir dans une photo finale ;
    b) division de toutes les photos capturées en tuiles ;
    c) calcul d'une fonction de coût pour chaque tuile, dans lequel seules les tuiles avec un second plan sont traitées ;

    ensuite, sur la base des tuiles des photos capturées, recherche de la meilleure sélection de tuiles en optimisant la fonction de coût globale ;
    sortie de la photo finale comprenant les carreaux sélectionnés qui constituent la meilleure combinaison de tuiles pour laquelle la fonction globale a la valeur minimale, ladite photo finale sortie étant la photo de référence avec au moins un objet immobile supprimé et remplacé par l'arrière-plan d'au moins une photo consécutive.

10. Le système de traitement de données selon la revendication 9, dans lequel le calcul de la fonction de coût est effectué selon la formule :

$$C_{x_p} = O_{x_p} + \sum_{(p,q)} V_{pq}(x_p, x_q)$$

où $C_{x_p}$ est un coût d'affectation d'une tuile $x_p$ à une position donnée p ;
$O_{x_p}$ est un composant définissant si la tuile contient un objet à supprimer ;
$V_{pq}(x_p, x_q)$ est la somme des différences au carré entre les pixels adjacents de la tuile $x_p$ et d'une tuile voisine $x_q$.

11. Le système de traitement de données selon la revendication 9, dans lequel, à chaque itération consécutive de l'étape d'optimisation de la fonction de coût globale, une nouvelle valeur de la fonction de coût est calculée pour toutes les tuiles candidates qui sont des tuiles voisines de la tuile remplacée dans la photo de référence lors de l'itération précédente.

12. Le système de traitement de données selon la revendication 9, dans lequel, avant l'étape a), l'alignement de chacune d'au moins une photo consécutive avec la photo de référence est effectué.

13. Téléphone mobile comprenant un système de traitement de données selon la revendication 9.

14. Un produit programme informatique comprenant des instructions qui, lorsqu'elles sont exécutées par un processeur, amènent le processeur à effectuer des opérations, les opérations comprenant :

    - fournir une photo de référence contenant au moins un objet immobile à supprimer de la photo de référence ;
    - fournir au moins une photo consécutive prise sous un angle différent de celui de la photo de référence et contenant ledit objet immobile à supprimer de la photo de référence ;
    pour la photo de référence et chacune desdites au moins une photo consécutive, effectuer séparément :

    a) détection dudit objet immobile à supprimer de la photo de référence, où la photo est divisée en deux plans, dans laquelle au moins un objet à supprimer est affecté au premier plan et le second plan comprend des éléments à sortir dans une photo finale ;
    b) division de toutes les photos capturées en tuiles ;
    c) calcul d'une fonction de coût pour chaque tuile, dans lequel seules les tuiles avec un second plan sont traitées ;

    ensuite, sur la base de toutes les tuiles des photos capturées, recherche de la meilleure sélection de mosaïques en optimisant la fonction de coût globale ;
    sortie de la photo finale comprenant les tuiles sélectionnées qui constituent la meilleure combinaison de tuiles pour laquelle la fonction globale a la valeur minimale, ladite photo finale sortie étant la photo de référence avec au moins un objet immobile supprimé et remplacé par l'arrière-plan d'au moins une photo consécutive.

15. Le produit programme informatique selon la revendication 14, dans lequel, avant l'étape a), l'alignement de chacune d'au moins une photo consécutive avec la photo de référence est effectué.

Multiple photos with fence          Result with removed fence

# FIG.1

Keypoints found by detector

# FIG. 2

Start

Taking of the
reference photo
101

Feeding new
photo
102

Image
alignment
200

Object
detection
300

Division into tiles
400

Tile based cost
computation
500

Selecting tiles with global
optimization
600

Blending
selected tiles
700

Final result
800

End

# FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017359523 A1, Rubinstein
- US 2018330470 A1, Karki
- WO 2021035228 A2

**Non-patent literature cited in the description**

- **CHRIS HARRIS** ; **MIKE STEPHENS**. A Combined Corner and Edge Detector. *Alvey Vision Conference*, 1988
- **M. A. FISCHLER** ; **R. C. BOLLES**. Random Sample Consensus: A Paradigm for Model Fitting with Applications to Image Analysis and Automated Cartography.. *Comm. of the ACM*, 1981
- **PATRICK PEREZ** ; **MICHEL GANGNET** ; **ANDREW BLAKE**. *Poisson Image Editing*, 2014